# EUROPÄISCHE PATENTSCHRIFT

(11) **EP 1 508 396 B1**
(45) Veröffentlichungstag und Bekanntmachung des Hinweises auf die Patenterteilung: **03.01.2007**
(21) Anmeldenummer: 04019528.1
(22) Anmeldetag: 18.08.2004
(51) Int. Cl.: B23K 11/31

(54) **Verfahren und Vorrichtung zum Steuern der Andruckkraft einer Schweisszange**
Method and device for controlling welding pressure of a welding gun
Méthode et dispositif pour le contrôle de la force de pression d'une pince de soudage

(30) Priorität: 20.08.2003 DE 10338176
(43) Veröffentlichungstag der Anmeldung: 23.02.2005
(73) Patentinhaber: KUKA Roboter GmbH, 86165 Augsburg (DE)
(72) Erfinder: Wiedemann, Günther, 86368 Gersthofen (DE); Pecher, Franz, 86199 Augsburg (DE)
(74) Vertreter: Lempert, Jost

(56) Entgegenhaltungen:
- EP-A- 1 088 614
- US-A- 5 981 898
- US-A1- 2003 132 201
- PATENT ABSTRACTS OF JAPAN Bd. 1998, Nr. 09, 31. Juli 1998 (1998-07-31) & JP 10 094882 A (TOYOTA MOTOR CORP), 14. April 1998 (1998-04-14)
- PATENT ABSTRACTS OF JAPAN Bd. 0180, Nr. 23 (M-1541), 14. Januar 1994 (1994-01-14) & JP 5 261558 A (SUZUKI MOTOR CORP), 12. Oktober 1993 (1993-10-12)

## Beschreibung

Die Erfindung betrifft ein Verfahren und eine Vorrichtung zum Steuern der Andruckkraft der Elektroden einer durch einen Elektromotor angetriebenen Schweißzange, insbesondere eines Industrieroboters, während eines Schweißvorganges.

Schweißzangen zum Punktschweißen wurden früher ausschließlich von pneumatischen oder hydraulischen Aktoren angetrieben. Nachteilig ist die notwendige Bereitstellung des Kraftmediums, in der Regel Öl, und die damit verbundene Verschmutzung durch dieses. Weder ein kontrolliertes Schließen und Öffnen noch ein sanftes Aufsetzen der Elektroden auf die zu verschweißenden Bleche waren möglich. Der Kraftverlauf war nicht kontrollierbar. Zur Behebung dieser Probleme werden in verstärktem Maße elektrische Antriebe eingesetzt. Ein entsprechender Servoantrieb besteht in der Regel aus einem bürstenlosen Gleichstrommotor mit nachgeordnetem hoch untersetzendem Getriebe, welches in der Regel einen Linearabtrieb mit einer Kugelrollenspindel aufweist. Derartige Antriebe können zur Aus- bzw. Umrüstung bestehender Zangenmechaniken verwendet werden. Der Zangen-Servoantrieb kann als Zusatzachse zum Motor betrieben und in die Robotersteuerung integriert werden, was konsistentes Bedienen und Programmieren, synchrones Schließen und Öffnen der Zange sowie kontrollierten Kraftaufbau und Kraftsteuerung ermöglicht. Die Ansteuerung des Zangenantriebs erfolgt während des Schließens und Öffnens lagegeregelt. Im geschlossenen zustand, d.h. wenn die Elektroden Blechberührung haben, erfolgt der Aufbau der Schweißkraft und deren Steuerung oder Regelung bis zum Ende des Schweißvorganges.

Die Aufbringung der Schweißkraft erfolgt in der Regel im Momentenbetrieb, bei der zur Aufbringung einer gewünschten Elektrodenkraft ein dieser entsprechender Motorstrom vorgegeben wird, um damit ein definiertes Motormoment zu erreichen. Dies kann dadurch realisiert werden, dass ein virtueller Punkt im Blech angefahren wird. Da sich die Elektroden nach Berührung der Blechoberfläche nur minimal bewegen, geht die vom Drehzahlregeler der Motorsteuerung ausgegebene Stellgröße (Motormoment bzw. Motorstrom) aufgrund des PI-Verhaltens des Reglers in die Begrenzung. Wird die Begrenzung auf dem zielwert entsprechender Elektroden in Kraft gesetzt, soll sich im geschlossenen Zustand der Zange automatisch die gewünschte Elektrodenkraft einstellen. Die so erzeugte Elektrodenkraft entspricht aufgrund von Lagerreibungen, Stick-Slip-Effekten, Reibung, Selbsthemmung und Losbrechkräften im Getriebe nur bedingt dem erzeugten Motorstrom. Des weiteren haben Materialerwärmungen und Alterungseffekte einen negativen Einfluss. Im Betrieb zeigt sich bei höheren Kräften eine Verklemmung der Mechanik. Dies führt bei hartem Aufsetzen der Elektroden auf das Blech und der hohen resultierenden Verzögerungskräfte zu einer momentan erhöhten Elektrodenkraft, die in Folge der eintretenden Verklemmung der Mechanik bestehen bleibt. Die so entstehenden Kraftfehler können nur durch aufwendige und häufige Kalibriermaßnahmen teilweise vermindert werden. Ein weiteres Problem besteht darin, dass die Zangenmechanik im verklemmten Zustand auf kleine Änderungen des Motormoments nicht reagiert und erst bei erheblichen Änderungen die Losbrechkräfte erreicht und sich entsprechend ruckartig bewegt. Dies alles zeigt sich beim Abfahren einer Krafttreppe im Momentenbetrieb darin, dass die Elektrodenkräfte stark streuen und Stromänderungen nur unzureichend folgen. Da die damit erreichte Genauigkeit der Elektrodenkraft aufgrund der hohen Reibanteile des mechanischen Systems oft nicht ausreicht, sind aus der Praxis Hardware-Lösungen bekannt, die mit Hilfe eines Kraftsensors einen Regelkreis mit dem Motorstrom als Stellgröße aufbauen. Dies erfordert spezielle Frequenzumrichter, die nicht in eine existierende Robotersteuerung integrierbar sind. Insbesondere das Umschalten zwischen Lage-Drehzahlregelung (während Öffnen und Schließen der Zange) und Kraft-Motorstrom-Regelung (beim Aufbringen der Schweißkraft) macht erhebliche Probleme, da diese nicht zeitlich mit der Bahn des Roboters synchronisierbar sind und insbesondere nicht während einer Bewegung ausgeführt werden können.

Die JP 10 094882 A betrifft ein Verfahren und eine Vorrichtung zum Detektieren und Steuern des Drucks einer Schweißzange, indem der elastische Versatz der Elektrodenspitzen nach der Druckaufbringung mittels der Schweißzange gemessen wird und der Druck aufgrund der Bewegung erhalten wird. Hierzu wird eine Elektrodenspitze der Schweißzange mittels eines Servomotors gegen die andere Schweißzange bewegt. Wenn die eine Elektrodenspitze auf der anderen Elektrodenspitze anschlägt und (wohl genauer auf das zwischen beide liegende Teil) und weiter zum Andrücken gegen die andere Elektrodenspitze angetrieben wird, wird ein Druck und eine elastische Deformation in der Elektrodenspitze 10 erzeugt. Wenn die Elektroden sich berühren steigt der Strom durch den Motor stark an. Die Drehung eines Encoders soll von der Zeit des Wechsels des Laststromes gemessen werden und die elastische Deformation der Elektrodenspitze wird hieraus berechnet. Im Folgenden soll dann der Druck F aus der berechneten elastischen Deformation und dem Druck F berechnet werden. Diese Aussage ist völlig unverständlich. Im Weiteren ist gesagt, dass ein Druckkorrektursystem den Servomotor durch einen Motortreiber in Vorwärts- und Rückwärtsrichtung antreibt, um den Druck auf einen geeigneten Wert zu setzen. So soll der Druck korrekt gemessen werden können, ohne durch Störungen beeinträchtigt zu sein, wobei offen ist, wie die Druckkraft und Zangenkraft bestimmt werden.

Die JP 5-261558 A beschreibt nicht mehr als das Prinzip der Steuerung einer servomotorischen Schweißzange, bei der mittels eines Motors eine Spindel bewegt wird, um mittels Drucksteuerung eine Kraft zwischen Zangenelektroden zu erzeugen. Es soll eine Drucksteuerung in Echtzeit und mit hoher Präzision erfolgen, indem die Zahl der Umdrehungen des Antriebsmotors und der Öffnungszustand der Zange frei gelehrt werden. Eine Messung des erzeugten Druckes ist nicht vorgesehen.

Die US 5,981,898 A beschreibt ein Verfahren zum Steuern des Elektrodendrucks einer Schweißzange, wobei eine durchschnittliche Motorposition für ein bestimmtes Motormoment unter Mittelung mehrerer Messungen bei einem zuvor fest eingestellten Motorstrom der Zuordnung zur Zangenkraft offen bleibt. Die hier ermittelte durchschnittliche Position für ein bestimmtes Motormoment soll als Zielposition des Motors während des Schweißvorgangs genutzt werden.

Die EP 1 088 614 betrifft eine Roboterschweißzange als solche und befasst sich lediglich mit der mechanischen Ausgestaltung des Spindelantriebs.

Die US 2003/0132201 A1 betrifft ein Verfahren und eine Vorrichtung zum gesteuerten Widerstandspunktschweißen und insbesondere eine Steuervorrichtung zum Punktschweißen, die den Motor- und Schweißstrom einstellt. Hier wird ein fester Motorstrom für eine bestimmte gewünschte Schweißkraft an dem Motor vorgegeben (Momentenbetrieb).

Der Erfindung liegt die Aufgabe zugrunde unter Vermeidung der oben genannten Nachteile ein Verfahren und eine Vorrichtung zum Steuern der Andruckkraft einer Schweißzange zu schaffen, mittels denen die gewünschte Andruckkraft mit hoher Genauigkeit erreicht werden kann.

Erfindungsgemäß wird die genannte Aufgabe bei einem Verfahren der eingangs genanten Art durch die Merkmale des Anspruchs 1 gelöst, welches dadurch gekennzeichnet ist, dass die Andruckkraft durch Steuern der Motorposition geregelt wird.

Zur Lösung der genannten Aufgabe sieht die Erfindung weiterhin eine Vorrichtung der gattungsgemäßen Art durch die Merkmale des Anspruchs 11 vor.

Erfindungsgemäß wird im Gegensatz zum Stand der Technik die Zangenkraft nicht durch Steuerung oder auch Regelung des Motorstroms, sondern über die Motorposition unter Berücksichtigung der Federkonstante der Zangenmechanik gesteuert bzw. geregelt. Die Beziehung zwischen Motorposition, die in an sich bekannter Weise über einen integrierten Resolver oder Inkrementalgeber gemessen wird und der resultierten Elektrodenkraft hat sich als annähernd linear erwiesen und entspricht näherungsweise der Federkonstante der Schweißzange. Auch das Verhältnis der an der Zange mittels eines integrierten Kraft-Sensors erfassten Kräfte zu den tatsächlich an den Elektrodenkappen ausgeübten Kräfte, die im Rahmen eines Kalibriervorgangs gemessen werden können, erweist sich als hoch linear. Die Erfindung beinhaltet also eine Regelung und eine Regelvorrichtung für die Zangenkraft mit einem Regelkreis, wobei Regelgröße die Zangenkraft und Stellgröße die Motorposition, nicht aber wie beim Stande der Technik, der Motorstrom ist.

In einer bevorzugten Ausgestaltung des erfindungsgemäßen Verfahrens ist vorgesehen, dass die Motorposition mittels mindestens eines in den Elektromotor integrierten Resolvers oder Inkrementalgeber gemessen wird. Hierzu ist die erfindungsgemäße Vorrichtung gekennzeichnet durch durch einen in den Motor integrierten Resolver zur Messung der Motorposition. Während die Andruckkraft grundsätzlich direkt an den Elektroden gemessen werden kann, wobei allerdings die EMV Probleme verursachen kann, sieht die Erfindung in bevorzugter Weise vor, dass die Andruckkraft mittels Sensoren an einem von den Elektroden entfernten Ort der Schweißzange erfasst wird. In bevorzugter Ausgestaltung ist dabei vorgesehen, dass aus Stellgröße eines Kraftgebers und der Berücksichtigung der Federkonstante der Schweißzange eine Weggröße (Weg, Weginkrement) bestimmt wird, wobei weiterhin die bestimmte Weggröße mittels einer Drehzahlregelung weiterverarbeitet wird.

Während eine weitere bevorzugte Ausgestaltung des erfindungsgemäßen Verfahren vorsieht, dass die Andruckkraft mittels Dehnungsmessstreifen an der Schweißzange erfasst wird, zeichnet sich eine äußerst bevorzugte Ausgestaltung dadurch aus, dass die Andruckkraft mittels Sensoren an einem von den Elektroden entfernten Ort der Schweißzange erfasst wird.

Zur Erfassung der an der Schweißzange ausgeübten Kraft ist in Weiterbildung vorgesehen, dass die Andruckkraft mittels Sensoren an einem von den Elektroden entfernten Ort der Schweißzange erfasst wird, wobei insbesondere die Andruckkraft mittels Dehnungsmessstreifen an der Schweißzange erfasst wird und/oder die Schweißkraft in Brückenschaltung von Dehnungsmessstreifen an der Schweißzange erfasst wird.

Demgemäß ist in Weiterbildung die erfindungsgemäße Vorrichtung dadurch ausgestaltet, dass die Messeinrichtungen durch Dehnungsmessstreifen gebildet sind, wobei Dehnungsmessstreifen an Zangenarmen angeordnet sind oder aber mindestens ein Dehnungsmessstreifen an einem Verbindungshebel von Motor zum mit ihm festverbundenen Schweißzangenarm angeordnet ist.

Eine weitere bevorzugte Ausgestaltung der erfindungsgemäßen Vorrichtung sieht vor, dass Dehnungsmessstreifen als Messbrücke geschaltet sind. Darüber hinaus kann in erfindungsgemäßer Weiterbildung eine Einrichtung zur Bearbeitung und Isolierung des durch den Kraft-Sensor gemessenen Kraft-Signals vorgesehen sein.

Weitere bevorzugte Ausgestaltung der erfindungsgemäßen Vorrichtung sind einen Wandler zur Wandlung des gemessenen Kraftsignals in einen digitalisierten Kraft-Ist-Wert gekennzeichnet, wobei insbesondere eine Umrechnungseinheit zur Umrechnung des gemessen, ggf. digitalisierten Kraft-Ist-Wert-Signals in eine physikalische Zangenkraft und/oder eine Vergleichseinrichtung (34, 35) zum Vergleich von gemessener physikalischer Ist-Kraft und gewünschter Soll-Kraft zur Bestimmung einer Regelabweichung und einer Stellgrößen vorgesehen sind.

Andere Ausgestaltungen der erfindungsgemäßen Vorrichtung zeichnen sich durch eine Umrechnungseinheit zur Umrechung der Kraft-Stellgröße in einem Verfahrweg (ΔF ~ Δs) des Elektromotors aus, wobei insbesondere weiterhin eine Vergleichseinrichtung zum Vergleich der Soll-Position mit einer am Motor erfassten Ist-Position und insbesondere ein Positionsregler zur Regelung der Position des Elektromotors vorgesehen sind. Erfindungsgemäß arbeitet der Kraftregler nach dem Lageregler. Auch wäre der Einsatz des Kraftreglers vor dem Lageregler möglich.

In weiterer bevorzugter Ausgestaltung des erfindungsgemäßen Verfahrens ist vorgesehen, dass eine Kalibrierung der Verhältnisse von zangenkraft zu Weg und/oder von Sensorwert zu Zangenkraft erfolgt, die der Federkonstante entspricht.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:
- Fig. 1: einen mit einer X-Schweißzange an seiner Hand versehenen Sechs-Achs-Industrieroboter;
- Fig. 2: die Schweißzange der Fig. 1 in vergrößerter Darstellung mit Positionen zur Anordnung von Drucksensoren;
- Fig. 3: die Anordnung von Dehnungsmessstreifen zu einer Messbrücke als Sensor;
- Fig. 4: ein Blockschaltbild zur Kraft-Lage-Regelung gemäß der Erfindung;
- Fig. 5: ein Ablaufdiagramm zur erfindungsgemäßen Kraft-Lage-Regelung;
- Fig. 6a, b: Diagramme des Abfahrens einer Krafttreppe bei Kraft-Lage-Regelung (Fig. 7a) und in herkömmlichem Momentenbetrieb (Fig. 7b); und
- Fig. 7: ein Diagramm zur Kraft-Sensor-Kalibrierung.

Die Erfindung betrifft die Regelung der Andruckkraft einer mittels eines Elektromotors angetriebenen Schweißzange durch Regelung der Motorposition des Elektromotors.

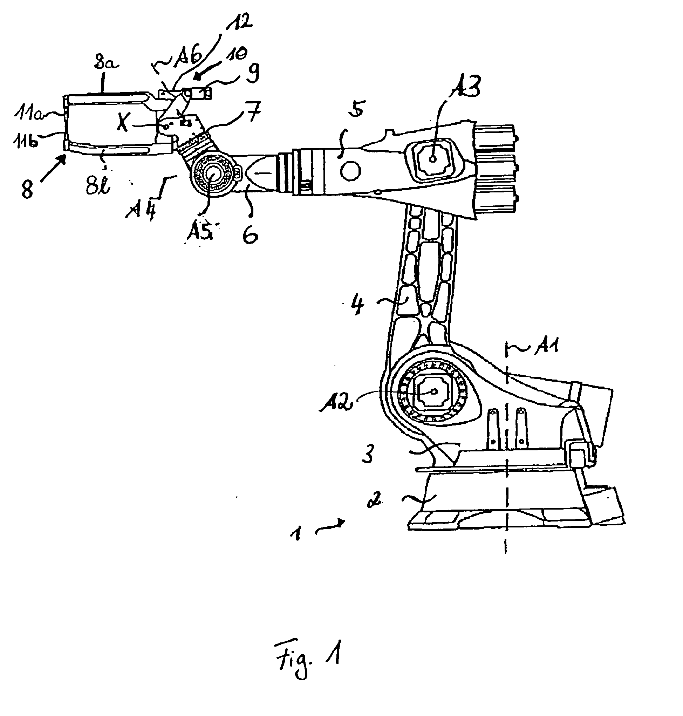

Die Fig. 1 zeigt einen herkömmlichen Industrieroboter 1 mit einem Sockel 2, einem um die erste Achse des Roboters 1, die vertikale A1-Achse drehbaren Karussell, einem an diesem um die zweite Achse, die horizontale A2-Achse, verschwenkbaren Roboterschwinge 4, einem an diesem um die dritte Achse, die horizontale A3-Achse schwenkbar angelenkten Roboterarm 5. Am Roboterarm 5 ist die Roboterhand 6 befestigt, die aus um drei Achsen A4 bis A6 verschwenkbaren Elementen besteht. Am Handflansch 7 der Roboterhand 6 ist eine X-Schweißzange 8 befestigt, deren beide Elektrodenarme 8a, 8b um X zueinander unter dem Antrieb eines einen Zangenhauptmotor 9 aufweisenden Spindelantriebs 10 verschwenkbar und deren Stiftelektroden 11a, 11b damit gegen zu verscheißende Teile anpressbar sind. Der Zangenhauptmotor 9 ist mit dem Elektrodenarm 8b verbunden, das freie Spindelende der Spindel 12 mit dem Elektrodenarm 8a.

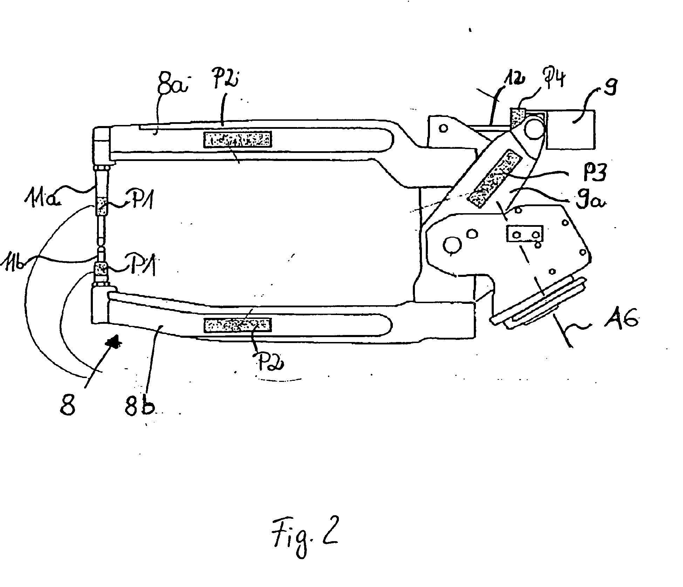

Die Schweißzange 8 ist in der Fig. 2 vergrößert dargestellt. Weiterhin sind in der Fig. 2 Positionen P1, P2, P3, P4 zur Anordnung von Drucksensoren angegeben.

Die Positionen P1 befinden sich im Bereich der Elektroden 11a, 11b und messen direkt den auf diese ausgeübten Druck. Die Positionen P2 befinden sich an den Elektrodenarmen und messen Biegungen derselben aufgrund der gegeneinander gedrückten Elektroden 11a, 11b. Die Position P3 befindet sich an einem Verbindungshebel 9a zum Befestigungspunkt des Elektromotors 9 und kann demgemäss dessen Biegung bei Druckausübung auf die Elektroden 11a, 11b messen. Bei P4 befindet sich ein piezo-elektrischer Sensor zur Messung der Andruckkraft. Dieser Sensor ist vorzugsweise im Zangenhauptmotor integriert.

Art und Ort der Kraftmessung sind nicht wesentlich. Die Wahl des Sensors und dessen Einbauort werden beeinflusst durch die mechanischen Gegebenheiten der Zange und der Eignung des Sensors. Weiterentwicklungen können daher die Wahl des Sensors wie dessen Einbauort entscheidend beeinflussen.

Woher der gemessene Kraftwert kommt, ist für die Regelung nicht wesentlich und wird nur beispielhaft exemplarisch dargestellt.

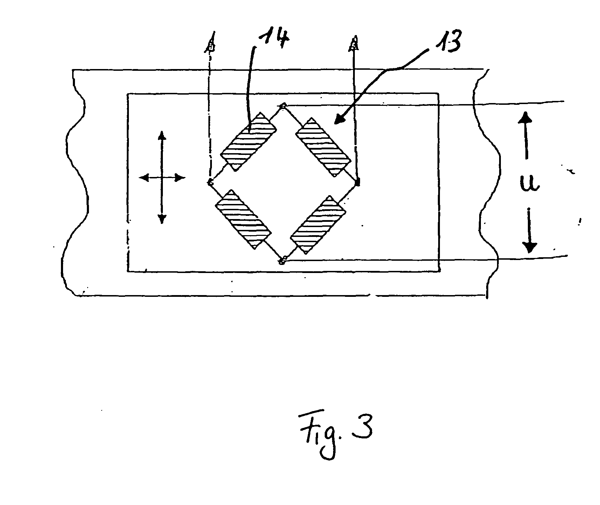

Die Drucksensoren sind vorzugsweise in Form von DMS-Messbrücken 13 mit Dehnungsmessstreifen 14 ausgebildet, wobei letztere in Form einer Brückenschaltung angeordnet sind, wie dies in der Fig. 3 dargestellt ist.

Das von den genannten Druckdatensensoren gemessene Signal fließt als Ist-Signal in die erfindungsgemäße Kraft-Lage-Regelung des Elektromotors 9 ein.

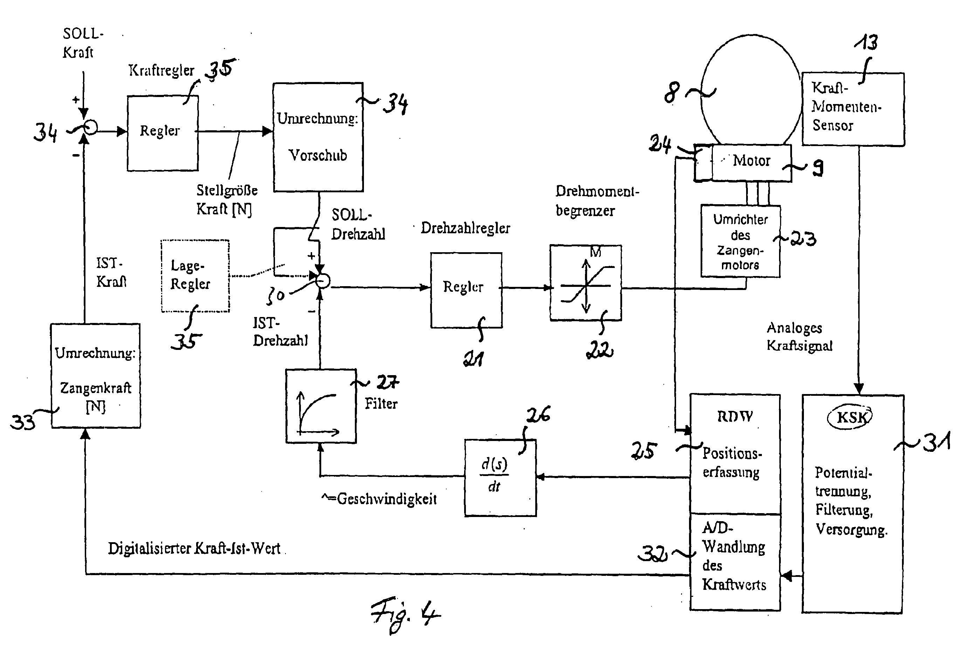

Ein Blockschaltbild einer erfindungsgemäßen Vorrichtung zur Kraft-Lage-Regelung des Motors ist in der Fig. 4 dargestellt.

Die schematisch dargestellte Zange 8 ist durch den Motor 9 angetrieben und weist mindestens einen Kraft-Momenten-Sensor 13 in der vorstehend beschriebenen Weise auf.

Die Steuerung des Elektromotors 9, der ein elektrischer Servomotor ist, weist in an sich bekannter Weise einen Drehzahlregler 21, einen Drehmomentbegrenzer 22 sowie einen Umrichter 23 auf.

Der Motor ist mit einem Resolver 24 versehen, der mit einem Resolver-Digitalwandler-RDW-25 verbunden ist, worüber die Positionserfassung oder die Erfassung der Stellung des Motors 9 erfolgt. Über einen Differenzierer 26 sowie einen Filter 27 wird derart die Ist-Drehzahl des Motors 9 erfasst, die einem dem Drehzahlregler 21 vorgeordneten Vergleicher 30 zugeführt wird.

Der Kraft-Momenten-Sensor 13 ist mit einer Kraftsensor-Karte 31 verbunden, in dem eine Potentialtrennung und Filterung sowie die Versorgung des Sensors erfolgt. An die Kraft-Sensorkarte 31 schließt sich ein AD-Wandler 32 an, mit dem der gemessene Kraft-Ist-Wert digitalisiert wird. Dieser wird ggf. einer Umrechnungseinheit 33 zugeführt, in der der beispielsweise an den Positionen P2, P3 oder P4 gemessene digitalisierte Kraft-Ist-Wert in die tatsächliche Zangenkraft zwischen den Elektroden umgerechnet wird. Der Umrechnungsfaktor kann aufgrund einer Kalibrierung der an der Position P2, P3 oder P4 gemessenen Kraft aufgrund der zwischen den Elektroden an der Position P1 in einem Kalibrierungsvorgang ermittelten Kraft bestimmt werden. Die umgerechnete Kraft geht als Ist-Kraft in einen Vergleicher 34 ein, dem als Sollwert die gewünschte Soll-Kraft zugeführt wird. Aufgrund des Vergleichs erzeugt ein Kraftregler 35 eine Stellgröße hinsichtlich der aufzubringenden Kraft, die in einem weiteren Umrechner 34 in einen Vorschub für den Elektromotor 3 umgerechnet wird und die als Soll-Drehzahl dem Vergleicher 30 zugeführt wird, der aufgrund eines Vergleichs zwischen der o.g. Ist-Drehzahl des Ausgangs des Filters 27 und der Soll-Drehzahl des Umrechners 34 ein Stellsignal für den Drehzahlregler 21 erzeugt. In dieses wird im normalen Lageregelbetrieb das Signal eines dem Vergleicher 30 zugeführten Lagereglers 35 eingehen.

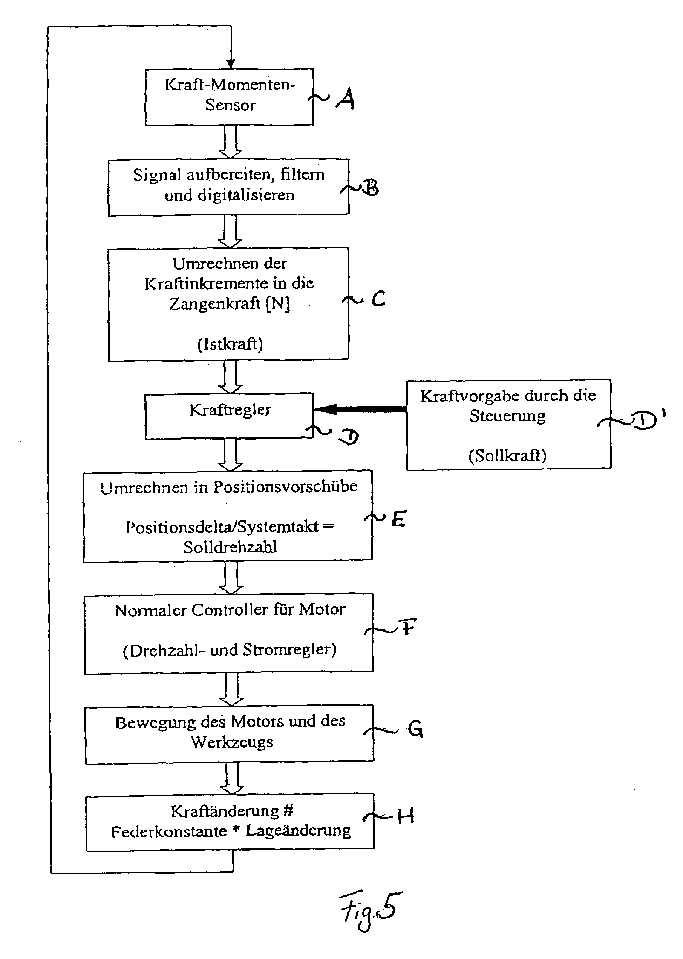

Zur Regelung der auf das Werkstück durch die Zange 8 aufgebrachten Kraft wird eine tatsächliche Kraft über den Kraft-Momenten-Sensor 13 in einem Schritt A (Fig. 5) erfasst, das vom Sensor abgegebene Signal aufbereitet, gefiltert und digitalisiert (Schritt B). Das genannte Kraftsignal, das als Inkrement gegeben ist wird mittels eines festen Umrechnungsfaktors anschließend in der Umrichtungseinheit 33 in die Zangenkraft in Newton als Ist-Kraft umgerechnet (Schritt C) . Es erfolgt ein Vergleich mit der durch die Steuerung (Schritt D') vorgegebenen Soll-Kraft und die Bestätigung der Regelabweichung. Anschließend erfolgt durch Multiplikation mittels eines Faktors, wie eines P-Faktors bei beispielsweise einem P-Regler die Ausgabe einer Stellgröße (Schritt D), die wiederum im genannten Umrechner 34 in Positionsvorschübe und in eine Soll-Drehzahl entsprechend dem Quotienten aus Positionsdelta und Systemtakt umgerechnet wird (Schritt E). Diese Soll-Drehzahl wird der an sich vorhandenen Steuerung (Drehzahlregler 21, DrehmomentBegrenzer 22 und Umrichter 23) für den Motor 9 zugeführt (Schritt F), wodurch die Bewegung des Motors in die jeweilige Position und damit gesteuert wird (Schritt E) und damit eine Kraftänderung in der Zange 8 entsprechend der zwischen Motor und Kraft-Momenten-Sensor der Zange 8 gegebenen Federkonstante sowie vorgenommenen Lageänderung zur Ausübung der gewünschten (Soll-)kraft bewirkt wird. Die sich ergebende Kraft wird wiederum erfasst und ggf. einem erneuten Regelvorgang zugeführt (Schritt H).

Die Signalverarbeitung erfolgt bei der zeitdiskreten digitalen Regelung der Motorposition über Drehzahlwerte entsprechend Solldrehzahl = Δs/IPO-Takt (Δs= Weginkrement; der IPO-Takt ist der Systemtakt des verwendeten Rechners) entsprechend der Federkonstante der Zangenmechanik. Der Kraftregler liefert, wie ein herkömmlicher Lageregler, eine Stellgröße in Form einer Drehzahl liefert, eine Stellgröße in Form eines Weges bzw. Position. Pro Systemtakt einmal ausgeführt/berechnet ist dieses Δs/Δt=v, die Solldrehzahl für den digitalen Drehzahlregler.

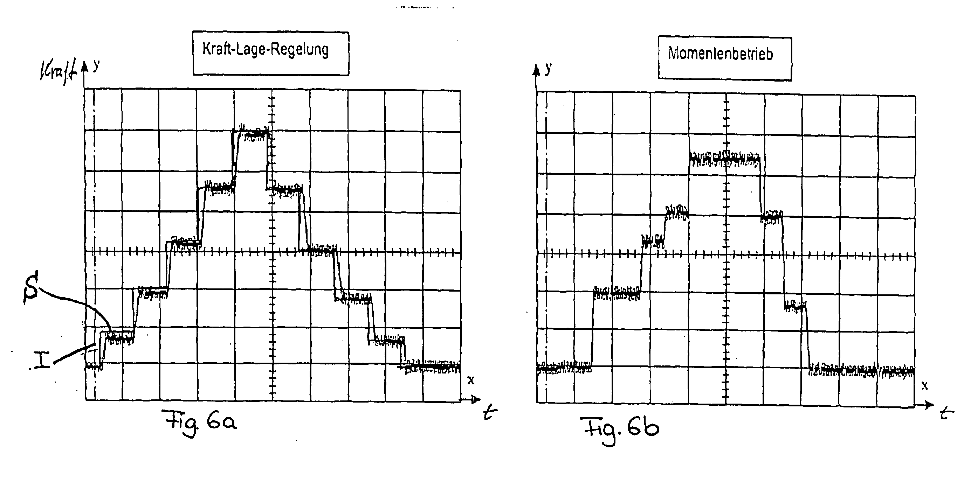

Die Fig. 6a zeigt ein Diagramm beim Abfahren einer auf eine Schweißzange aufgebrachten Krafttreppe mit identischen Kraftstufen. Das mittels eines externen Kraftmessers zwischen den Kappen einer Schweißzange gemessene Signal ist mit I bezeichnet. Die Diagramme zeigen das mit einem Oszyloskop aufgezeichnete Signal. Das ersichtliche Signalrauschen ist durch EMV-Störungen auf der Messleitung bedingt. Die Skalierungen sind in Y-Richtung ca. 500 Newton/Division und in X-Richtung 2-Sekunden-Division. Der Sollwert ist in Fig. 6a mit S angegeben. Es zeigt sich beim Abfahren dieser Krafttreppe folgt bei Kraft-Lage-Regelung entsprechend der Erfindung Ist- und Sollwert übereinstimmen. Die Fig. 6b zeigt eine entsprechende Kraftmessung beim Abfahren einer Krafttreppe im Momentenbetrieb. Der Sollwert ist hier nicht eingetragen. Es zeigt sich, dass mit einer bloßen Vorgabe des Motorstroms die resultierenden Elektrodenkräfte stark streuen und Stromänderungen nur unzureichend folgen.

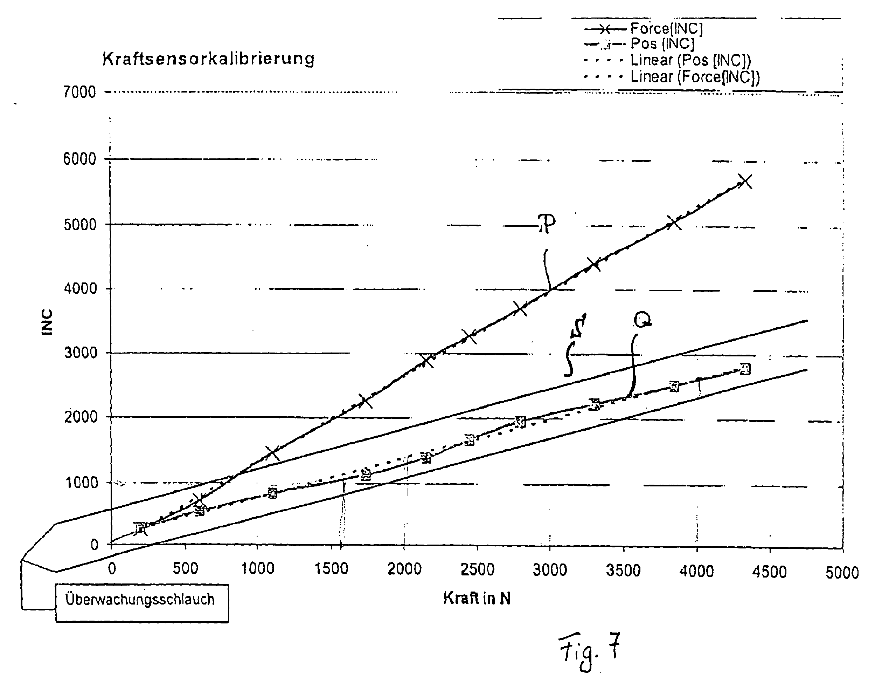

Die Fig. 7 zeigt die Beziehung zwischen der Position des Elektromotors, gemessen über den integrierten Resolver 24, wobei die Motorposition über Inkrementen INC angegeben ist, und der resultierenden Elektrodenkraft zwischen den Elektroden (Kurve P), gemessen durch einen Kraftsensor an der Position P1 der Fig. 2 im Rahmen eines Kalibrierungsvorganges bzw. der korrespondierenden Werte des integrierten Kraft-Sensors an der Position P4 der Fig. 2 für mehrere Punkte bei Stillstand der Zange: Kurve Q in Fig. 7.

Es zeigt sich zunächst, dass beide Beziehungen nahezu linear sind. Aus den dargestellten Kurven P und Q lassen sich in üblicher Weise die Regressionsgeraden der Kalibrierkurven der Beziehungen zwischen Elektrodenkraft, Motorposition und Messwert des integrierten Kraftsensors errechnen. Mit Hilfe der Parameter dieser Regressionsgeraden lassen sich die Kraftsensorwerte in Newton und diese in Positionsänderungen umrechnen. Wie dargestellt sind die Beziehungen annähernd linear. Sollte dies nicht der Fall sein, so ist eine Näherung durch Positionszüge, Splines oder beliebige andere Funktionen denkbar.

Die nach erfolgter Eichung bekannte Beziehung zwischen Zangenkraft und Motorposition ermöglicht - im Gegensatz zur Momentensteuerung und oder -regelung - auch die Auswertung dieser Daten zu Überwachungszwecken. So lässt sich beispielsweise prüfen, ob innerhalb eines vorgegebenen Toleranzbandes (Überwachungsschlauch S der Fig. 7) die aktuelle Position auch im Verhältnis zur anstehenden Ist-Kraft steht. Diese Prüfung kann, wie eine Schleppfehlerüberwachung der Robotersteuerung, permanent oder zyklisch erfolgen und nicht nur beim Erreichen der Zielkraft. Somit ist stets gewährleistet, dass die erfassten Kraftwerke Werte auch wahr sind, d.h. die Hardware ordnungsgemäß funktioniert.

Die Kraft- und Positionswerte können hierzu bei der Umschaltung von Lage- und Kraftregelung abgespeichert und die Änderungen der Positionen miteinander verglichen werden. Passen die entsprechenden Werte nicht mehr zueinander, so kann hieraus geschlossen werden, dass entweder die Kalibrierung falsch ist, der Sensor defekt ist, die Signalkette unterbrochen ist oder aber der Sensor falsch initialisiert wurde. Dies ist von besonderer Bedeutung bei Verwendung von Piezzo-Sensoren, deren Auswerteeinheit bei Null-Kraft ein Reset-Signal erhalten muss, um ein Wegdriften des Messwerts zu verhindern.

Die Auswertung des Verlaufs von Elektrodenkraft und Motorposition während des eigentlichen Schweißvorgangs liefert auch Informationen über die Qualität des erzeugten Schweißpunktes. Während der Schweißung muss die Zange in Folge der Aufschmelzung des zu verschweißenden Materials nachsetzten, d.h. sie muss ihre Position der zusammengedrückten Schweißlinse unter Beibehaltung der Elektrodenkraft anpassen. Dies geschieht einerseits durch die Elastizität der Zangenmechanik, andererseits ebenfalls durch die Regelung der Elektrodenkraft.

## Patentansprüche

1. Verfahren zum Regeln der Andruckkraft der Elektroden einer mittels eines Elektromotors angetriebenen Schweißzange, insbesondere eines Industrieroboters, während des Schweißvorganges, **dadurch gekennzeichnet, dass** die Andruckkraft durch Steuernder Motorposition derart geregelt wird, dass die an der Schweißzange gemessene Ist-Kraft mit einer gewünschten Soll-Kraft verglichen und derart eine Regelabweichung bestimmt wird, aus der eine Stellgröße für die Motorposition abgeleitet wird.

2. Verfahren nach Anspruch 1, **dadurch gekennzeichnet, dass** die Motorposition mittels mindestens eines in den Elektromotor integrierten Resolvers gemessen wird.

3. Verfahren nach Anspruch 1 oder 2, **dadurch gekennzeichnet, dass** die aufgebrachte Kraft über einen KraftSensoren der Schweißzange ermittelt wird.

4. Verfahren nach einem der vorangehenden Ansprüche, **dadurch gekennzeichnet, dass** aus Stellgröße eines Kraftreglers und der Berücksichtigung der Federkonstante der Schweißzange eine Weggröße (Weg, Weginkrement) bestimmt wird.

5. Verfahren nach Anspruch 4, **dadurch gekennzeichnet, dass** die bestimmte Weggröße mittels einer Drehzahlregelung weiterverarbeitet wird.

6. Verfahren nach einem der vorangehenden Ansprüche, **dadurch gekennzeichnet, dass** die Andruckkraft mittels Sensoren an einem von den Elektroden entfernten Ort der Schweißzange erfasst wird.

7. Verfahren nach einem der vorangehenden Ansprüche, **dadurch gekennzeichnet, dass** die Andruckkraft mittels Dehnungsmessstreifen an der Schweißzange erfasst wird.

8. Verfahren nach Anspruch 5, **dadurch gekennzeichnet, dass** die Schweißkraft in Brückenschaltung von Dehnungsmessstreifen an der Schweißzange erfasst wird.

9. Verfahren nach einem der Ansprüche 1 bis 6, **dadurch gekennzeichnet, dass** die Andruckkraft mittels eines piezo-elektrichen Sensors gemessen wird.

10. Verfahren nach einem der vorangehenden Ansprüche, **dadurch gekennzeichnet, dass** eine Kalibrierung der Verhältnisse von Zangenkraft zu Weg und/oder von Sensorwert zu Zangekraft, erfolgt.

11. Schweißvorrichtung mit einer mittels eines Elektromotors angetriebenen Schweißzange und mit einer Vorrichtung zum Regeln der Andruckkraft der Schweißzange während des Schweißvorgangs, **gekennzeichnet durch** eine Regeleinrichtung zur Bestimmung einer Regelabweichung aus dem Vergleich ein an der Schweißzange gemessenen Ist-Kraft mit einer gewünschten Soll-Kraft und zur Ableitung einer Stellgröße für die Motorposition des Elektromotors zur Steuerung derselben.

12. Vorrichtung nach Anspruch 11, **gekennzeichnet durch** einen in den Motor (9) integrierten Resolver (24) zur Messung der Motorposition.

13. Vorrichtung nach Anspruch 11, **gekennzeichnet durch** einen Inkrementalgeber zur Positionserfassung.

14. Vorrichtung nach einem der Ansprüche 11 bis 13, **gekennzeichnet durch** Messeinrichtungen (P1, P2, P3, P4) an der Schweißzange (8) zur Messung von von der Schweißzange (8) aufgebrachten Schweißkräften.

15. Vorrichtung nach Anspruch 14, **dadurch gekennzeichnet, dass** die Messeinrichtungen durch Piezo-Druck-/Dehnungssensoren gebildet sind.

16. Vorrichtung nach Anspruch 14, **dadurch gekennzeichnet, dass** die Messeinrichtungen durch Dehnungsmessstreifen gebildet sind.

17. Vorrichtung nach Anspruch 14, **dadurch gekennzeichnet, dass** Dehnungsmessstreifen/Sensoren an Zangenarmen oder Motor angeordnet sind.

18. Vorrichtung nach Anspruch 16 oder 17, **dadurch gekennzeichnet, dass** mindestens ein Dehnungsmessstreifen (P3) an einem Verbindungshebel von Motor zum mit ihm festverbundenen Schweißzangenarm (8b) haben angeordnet ist.

19. Vorrichtung nach einem der Ansprüche 14 bis 18, **dadurch gekennzeichnet, dass** Dehnungsmessstreifen (14) als Messbrücke geschaltet sind.

20. Vorrichtung nach einem der Ansprüche 11 bis 19, **gekennzeichnet durch** eine Einrichtung (31) zur Bearbeitung und Isolierung des **durch** den Kraft-Sensor (13) gemessenen Kraft-Signals.

21. Vorrichtung nach einem der Ansprüche 11 bis 20, **gekennzeichnet durch** einen Wandler (32) zur Wandlung des gemessenen Kraftsignals in einen digitalisierten Kraft-Ist-Wert.

22. Vorrichtung nach einem der Ansprüche 11 bis 21, **gekennzeichnet durch** eine Umrechnungseinheit (33) zur Umrechnung des gemessen, ggf. digitalisierten Kraft-Ist-Wert-Signals in eine physikalische Zangenkraft.

23. Vorrichtung nach einem der Ansprüche 11 bis 22, **gekennzeichnet durch** eine Vergleichseinrichtung (34, 35) zum Vergleich von gemessener physikalischer Ist-Kraft und gewünschter Soll-Kraft zur Bestimmung einer Regelabweichung und einer Stellgröße.

24. Vorrichtung nach einem der Ansprüche 11 bis 23, **gekennzeichnet durch** eine Umrechnungseinheit (34) zur Umrechung der Kraft-Stellgröße in einen Verfahrweg des Elektromotors.

25. Vorrichtung nach einem der Ansprüche 11 bis 24, **gekennzeichnet durch** eine Vergleichseinrichtung zum Vergleich der Soll-Position mit einer am Motor erfassten Ist-Position.

26. Vorrichtung nach einem der Ansprüche 11 bis 25, **gekennzeichnet durch** eine Vergleichseinrichtung zum Vergleich von Soll- und Ist-Motordrehzahl.

27. Vorrichtung nach einem der Ansprüche 11 bis 26, **gekennzeichnet durch** eine Vergleichseinrichtung zum Vergleich von Soll- und Ist-Motorstrom.

28. Vorrichtung nach einem der Ansprüche 11 bis 27, **gekennzeichnet durch** einen Positionsregler zur Regelung der Position des Elektromotors.

## Claims

1. Method for controlling the pressure force of the electrodes of a welding gun driven by an electric motor, in particular an industrial robot, during the welding process, **characterized in that** the pressing force is controlled by the control of the motor position in such a way that the actual force measured on the welding gun is compared with a desired nominal force and in this way a control deviation is determined from which a control variable for the motor position is derived.

2. Method according to claim 1, **characterized in that** the motor position is measured by means of at least one resolver integrated into the electric motor.

3. Method according to claim 1 or 2, **characterized in that** the force applied is established by means of a force sensor on the welding gun.

4. Method according to one of the preceding claims, **characterized in that** a path variable (path, path increment) is determined from a control variable of a force controller and the taking into account of the spring constant of the welding gun.

5. Method according to claim 4, **characterized in that** the determined path variable is further processed by means of a speed control.

6. Method according to one of the preceding claims, **characterized in that** the pressing force is determined by means of sensors at a welding gun location remote from the electrodes.

7. Method according to one of the preceding claims, **characterized in that** the pressing force is determined by means of resistance strain gauges on the welding gun.

8. Method according to claim 5, **characterized in that** the welding force is determined in the bridge circuit of resistance strain gauges on the welding gun.

9. Method according to one of the claims 1 to 6, **characterized in that** the pressing force is measured by means of a piezoelectric sensor.

10. Method according to one of the preceding claims, **characterized in that** a calibration takes place of the ratios of the gun force to the path and/or the sensor value to the gun force.

11. Welding apparatus with a welding gun driven by means of an electric motor and with a device for controlling the pressing force of the welding gun during the welding process, **characterized by** a control unit for determining a control deviation from the comparison of an actual force measured on the welding gun with a desired nominal force and for deriving a control variable for the electric motor position for controlling the same.

12. Device according to claim 11, **characterized by** a resolver (24) integrated into the motor (9) for measuring the motor position.

13. Device according to claim 11, **characterized by** an incremental sensor for determining a position.

14. Device according to one of the claims 11 to 13, **characterized by** measuring devices (P1, P2, P3, P4) on the welding gun (8) for measuring the welding forces applied by the latter.

15. Device according to claim 14, **characterized in that** the measuring devices are formed by piezoelectric-pressure/strain sensors.

16. Device according to claim 14 **characterized in that** the measuring devices are formed by resistance strain gauges.

17. Device according to claim 14, **characterized in that** resistance strain gauges/sensors are located on gun arms or motors.

18. Device according to claim 16 or 17, **characterized in that** at least one resistance strain gauge (P3) is located on a connecting lever from the motor to the welding gun arm (8b) firmly connected thereto.

19. Device according to one of the claims 14 to 18, **characterized in that** the resistance strain gauges (14) are connected as a measuring bridge.

20. Device according to one of the claims 11 to 19, **characterized by** a mechanism (31) for processing and isolating the force signal measured by the force sensor (13).

21. Device according to one of the claims 11 to 20, **characterized by** a converter (32) for converting the measured force signal into a digitized actual force value.

22. Device according to one of the claims 11 to 21, **characterized by** a converting unit (33) for converting the measured, optionally digitized actual force value signal into a physical gun force.

23. Device according to one of the claims 11 to 22, **characterized by** a comparator (34, 35) for comparing the measured, physical actual force and the desired nominal force for determining a control deviation and a control variable.

24. Device according to one of the claims 11 to 23, **characterized by** a converting unit (34) for converting the force control variable into an electric motor displacement path.

25. Device according to one of the claims 11 to 24, **characterized by** a comparator for comparing the nominal position with an actual position detected on the motor.

26. Device according to one of the claims 11 to 25, **characterized by** a comparator for comparing the nominal and actual motor speed.

27. Device according to one of the claims 11 to 26, **characterized by** a comparator for comparing the desired and actual motor current.

28. Device according to one of the claims 11 to 27, **characterized by** a position regulator for regulating the electric motor position.

## Revendications

1. Procédé de réglage de la force de pression des électrodes d'une pince de soudage entraînée par un moteur électrique, notamment un robot industriel, durant le processus de soudage, **caractérisé en ce que** l'on règle la force de pression par commande de la position du moteur de telle façon que la force réelle mesurée sur la pince de soudage est comparée à une force de consigne souhaitée et qu'ainsi l'on détermine un écart de réglage, duquel on déduit une valeur de commande de position du moteur.

2. Procédé selon la revendication 1, **caractérisé en ce que** la position du moteur est mesurée au moyen d'au moins un résolveur intégré au moteur électrique.

3. Procédé selon la revendication 1 ou 2, **caractérisé en ce que** la force appliquée est détectée par un capteur de force monté sur la pince de soudage.

4. Procédé selon l'une quelconque des revendications précédentes, **caractérisé en ce que** l'on détermine à partir de la valeur de commande d'un régulateur de force et en tenant compte de la raideur du rappel de la pince de soudage une valeur de la course (course, incrément de course).

5. Procédé selon la revendication 4, **caractérisé en ce que** la valeur de la course déterminée est traitée ultérieurement par une régulation tachymétrique.

6. Procédé selon l'une quelconque des revendications précédentes, **caractérisé en ce que** la force de pression est détectée au moyen de capteurs à un emplacement de la pince de soudage éloigné des électrodes.

7. Procédé selon l'une quelconque des revendications précédentes, **caractérisé en ce que** la force de pression est détectée sur la pince de soudage au moyen de jauges extensométriques.

8. Procédé selon la revendication 5, **caractérisé en ce que** la force de soudage est détectée par un circuit en pont sur la pince de soudage au moyen de jauges extensométriques.

9. Procédé selon l'une quelconque des revendications 1 à 6, **caractérisé en ce que** la force de pression est mesurée à l'aide d'un capteur piézoélectrique.

10. Procédé selon l'une quelconque des revendications précédentes, **caractérisé en ce que** s'effectue un calibrage des rapports entre la force de la pince et la course et/ou entre la valeur du capteur et la force de la pince.

11. Dispositif de soudage comportant une pince de soudage entraînée par un moteur électrique et un dispositif de réglage de la force de pression de la pince de soudage pendant le processus de soudage, **caractérisé par** un dispositif de réglage pour déterminer une différence de réglage par comparaison d'une force réelle mesurée sur la pince de soudage à une force de consigne souhaitée et pour déduire une valeur de commande de la position du moteur du moteur électrique pour commander celle-ci.

12. Dispositif selon la revendication 11, **caractérisé par** un résolveur (24) intégré au moteur (9) pour mesurer la position du moteur.

13. Dispositif selon la revendication 11, **caractérisé par** un capteur incrémentiel pour la détection de la position.

14. Dispositif selon l'une quelconque des revendications 11 à 13, **caractérisé par** des dispositifs de mesure (P1, P2, P3, P4) sur la pince de soudage (8) pour mesurer des forces de soudage appliquées par la pince de soudage (8).

15. Dispositif selon la revendication 14, **caractérisé en ce que** les dispositifs de mesure sont constitués par des capteurs de pression piézoélectriques ou extensiométriques.

16. Dispositif selon la revendication 14, **caractérisé en ce que** les dispositifs de mesure sont constitués par des jauges extensométriques.

17. Dispositif selon la revendication 14, **caractérisé en ce que** les jauges extensométriques/capteurs sont disposés sur les bras de la pince ou sur le moteur.

18. Dispositif selon la revendication 16 ou 17, **caractérisé en ce qu'**au moins une jauge extensométrique (P3) est disposée sur un levier de liaison entre le moteur et le bras (8b) de pince de soudage qui lui est relié rigidement.

19. Dispositif selon l'une quelconque des revendications 14 à 18, **caractérisé en ce que** des jauges extensométriques (14) sont incluses dans des circuits de ponts de mesure.

20. Dispositif selon l'une quelconque des revendications 11 à 19, **caractérisé par** un dispositif (31) de traitement et d'isolement du signal de force mesuré par le capteur de force (13).

21. Dispositif selon l'une quelconque des revendications 11 à 20, **caractérisé par** un convertisseur (32) pour transformer le signal de la force mesurée en une valeur de force réelle numérisée.

22. Dispositif selon l'une quelconque des revendications 11 à 21, **caractérisé par** un dispositif de conversion (33) pour convertir le signal de valeur réelle de la force mesurée, le cas échéant numérisé, en une force physique de pince.

23. Dispositif selon l'une quelconque des revendications 11 à 22, **caractérisé par** un comparateur (34, 35) pour comparer la force réelle physique mesurée et la force de consigne souhaitée pour déterminer une différence de réglage et une valeur de commande.

24. Dispositif selon l'une quelconque des revendications 11 à 23, **caractérisé par** une unité de conversion (34) pour convertir la valeur de commande de force en un déplacement du moteur électrique.

25. Dispositif selon l'une quelconque des revendications 11 à 24, **caractérisé par** un dispositif de comparaison pour comparer la position de consigne à une position réelle détectée sur le moteur.

26. Dispositif selon l'une quelconque des revendications 11 à 25, **caractérisé par** un dispositif de comparaison pour comparer la vitesse de consigne du moteur et sa vitesse réelle.

27. Dispositif selon l'une quelconque des revendications 11 à 26, **caractérisé par** un dispositif de comparaison pour comparer le courant de consigne du moteur à son courant réel.

28. Dispositif selon l'une quelconque des revendications 11 à 27, **caractérisé par** un régleur de position pour régler la position du moteur électrique.
